# EUROPEAN PATENT SPECIFICATION

(11) **EP 3 587 859 B1**
(45) Date of publication and mention of the grant of the patent: **18.12.2024**
(21) Application number: 18758077.4
(22) Date of filing: 27.02.2018
(51) Int. Cl.: F16G 5/20, C08K 3/22, C08K 5/098, C08L 23/16

(54) **TRANSMISSION BELT**
TRANSMISSIONSRIEMEN
COURROIE DE TRANSMISSION

(30) Priority: 27.02.2017 JP 2017035198; 29.01.2018 JP 2018012694
(43) Date of publication of application: 01.01.2020
(73) Proprietor: Mitsuboshi Belting Ltd., Kobe-shi, Hyogo 653-0024 (JP)
(72) Inventor: OZAKI, Toshiki, Kobe-shi Hyogo 653-0024 (JP); HINENO, Yorifumi, Kobe-shi Hyogo 653-0024 (JP); KAGEYAMA, Mikio, Kobe-shi Hyogo 653-0024 (JP)
(74) Representative: Hoffmann Eitle
(86) International application number: PCT/JP2018/007368
(87) International publication number: WO 2018/155722

(56) References cited:
- EP-A1- 2 824 363
- EP-A1- 3 489 544
- WO-A1-2014/006916
- DE-A1- 102008 025 030
- JP-A- 2014 209 026

## Description

### TECHNICAL FIELD

The present invention relates to a power transmission belt including a cured product of a rubber composition containing an ethylene-α-olefin elastomer, capable of realizing high hardness and high modulus.

### BACKGROUND ART

Friction power transmission belt and toothed belt are utilized as power transmission means from of old. For example, V-belt and V-ribbed belt are generally used as an auxiliary machine driving belt of automotive engine, a toothed belt is generally used as an OHC (overhead camshaft) driving belt, and raw edge cogged V-belt is generally used as a CVT (continuously variable transmission) driving belt. In those uses, demands in the increase of transmission power and the compactification of layout recently become severe, and furthermore, the development of products capable of withstanding the use under high temperature and low temperature conditions are desired. Particularly, in raw edge cogged V-belt used as a CVT driving belt of snow mobile and the like, the belt is low temperature when starting, but the belt is exposed to heat generated by an engine when driving and is high temperature. Therefore, a rubber composition capable of withstanding wide temperature region of from low temperature to high temperature is required. Strong adhesive property for suppressing peeling between a rubber composition and a fiber member such as a cord and reinforcing fabric and bending fatigue resistance capable to responding to a small diameter pulley for compactification are further required. Furthermore, high bending fatigue resistance capable of withstanding friction by the contact with a pulley and high resistance to lateral pressure from a pulley are required. Furthermore, in a toothed belt, reduction in belt width is required for compactification, and high hardness and high modulus of tooth rubber are required in order to respond to the requirement. To respond to various requirements, use of an ethylene-α-olefin elastomer as an elastomer constituting a rubber composition is increasing.

Ethylene-α-olefin elastomer does not have an unsaturated bond in a main chain and therefore has the characteristics of high heat resistance and high weather resistance. Furthermore, the ethylene-α-olefin elastomer does not have a polar group and therefore has the characteristics that a reinforcing agent including short fibers and carbon black can be added in large amount and high hardness and high modulus are relatively easily achieved. However, adding a large amount of the reinforcing agent to the ethylene-α-olefin elastomer has the following disadvantages. Specifically, when a large amount of carbon black has been added, generation of heat due to bending of a belt is increased and durability is easy to be deteriorated. Furthermore, when a large amount of short fibers has been added, poor dispersion is easy to occur and this may cause occurrence of cracks. For those reasons, various formulations for enhancing hardness and modulus while relatively decreasing the amount of the reinforcing agent have been investigated.

For example, WO1996/13544 (Patent Literature 1) discloses a belt (synchronous belt, V-belt or V-ribbed belt) containing a crosslinked product obtained by crosslinking an elastomer composition containing 100 parts by weight of an ethylene-α-olefin elastomer having an ethylene content of 55 to 78 wt%, 1 to 30 parts by mass of a metal salt of α,β-unsaturated organic acid and 0 to 250 parts by weight (preferably 25 to 100 parts by weight) of a reinforcing agent by a free radial donor. Carbon black, calcium carbonate, talc, clay and hydrous silica are described as the reinforcing agent.

WO1997/22662 (Patent Literature 2) discloses a power transmission belt (V-ribbed belt or toothed belt) containing a crosslinked product obtained by peroxide-crosslinking a mixture of 100 parts by weight of an ethylene-propylene-diene terpolymer (EPDM) having an ethylene content of 50 to 65 wt% and a diene content of less than 10 wt%, 32 to 100 parts by weight of a metal salt of α,β-unsaturated carboxylic acid and 0 to 30 parts by weight of filler. This literature describes white fillers such as a silicate and an oxide or carbonate of aluminum, calcium or magnesium as the filler. A composition containing 100 parts by weight of EPDM, 40 to 60 parts by weight of zinc diacrylate, 10 parts by weight of while filler, 25 parts by weight of carbon black and 5 parts by weight of dicumyl hydroperoxide is prepared in the Examples.

WO2010/047029 (Patent Literature 3) discloses a power transmission belt containing a crosslinked product obtained by organic peroxide-crosslinking a composition containing 100 parts by mass of an ethylene-α-olefin elastomer containing 5 mass% or more and less than 40 mass% of ethylene propylene diene monomer rubber having an ethylene content of 60 to 85 mass% and 32 to 100 parts by mass of a metal salt of α,β-unsaturated carboxylic acid. This literature describes a friction power transmission belt such as a flat belt, a V-belt or a V-ribbed belt, and a meshing power transmission belt such as a toothed belt, as the power transmission belt. In the Examples, compositions containing 100 parts by mass of an ethylene-α-olefin elastomer, 32.2 to 100 parts by mass of a metal salt of di(meth)acrylic acid, 50 parts by mass of carbon black, 5 parts by mass of zinc oxide and 6 parts by mass of an organic peroxide are prepared.

It is presumed in Patent Literatures 1 to 3 that the amount of an organic acid metal salt added is adjusted so as to obtain rubber compositions having the required performance after regulating an ethylene content of an ethylene-α-olefin elastomer to a certain range. However, in those compositions, the balance between crystallinity by an ethylene component and crosslinking by an organic acid metal salt is merely adjusted, and even though a belt is formed, the belt does not simultaneously satisfy various requirements required in a power transmission belt, such as cold resistance, heat resistance, adhesive property, bending fatigue resistance and abrasion resistance.

JP-A-2003-314616 (Patent Literature 4) discloses a high load power transmission belt (cogged V-belt or hybrid V-belt) containing a crosslinked product obtained by peroxide-crosslinking a composition containing 100 parts by weight of a rubber component comprising an ethylene-α-olefin elastomer and hydrogenated nitrile rubber, 20 to 40 parts by weight of an organic acid metal salt monomer and 5 to 35 parts by mass of short fibers. In the Examples, compositions containing 100 parts by weight of EPDM and hydrogenated nitrile rubber, 10 to 50 parts by weight of zinc dimethacrylate, 20 parts by weight of short fibers, 10 parts by weight of zinc oxide, 20 parts by weight of silica and 7 parts by weight of peroxide are prepared.

In the composition of Patent Literature 4, hydrogenated nitrile rubber is blended with an ethylene-α-olefin elastomer in order to enhance crack resistance. However, properties of the ethylene-α-olefin elastomer, such as cold resistance, are deteriorated and for good and bad, the composition has moderate performance. Furthermore, a heterogeneous composition having a sea-island structure is formed and in particular, there is a concern regarding separation at the time of deterioration with time.

JP-A-2002-257199 (Patent Literature 5) discloses a power transmission belt (V-ribbed belt, V-belt, cogged V-belt or flat belt) containing a crosslinked product obtained by organic peroxide-crosslinking a composition containing chloroprene rubber as a main rubber material, a metal oxide, an organic peroxide and a metal salt of α,β-unsaturated fatty acid. In this literature, zinc oxide, magnesium oxide and calcium oxide are exemplified as the metal oxide, and function as a crosslinking agent and function as an acid acceptor (corrosion prevention of a mold) are described as the function of the metal oxide. In the Examples, V-ribbed belts using compositions containing 100 parts by mass of chloroprene rubber, 5 to 20 parts by mass of aluminum acrylate, 4 parts by mass of magnesium oxide, 5 parts by mass of zinc oxide and organic peroxide are disclosed.

Patent Literature 5 has an object to improve adhesive wear of a power transmission belt containing chloroprene rubber, and does not describe the problem on an ethylene-α-olefin elastomer that greatly differs from chloroprene rubber in structure and properties. Furthermore, cold resistance, heat resistance and weather resistance of the chloroprene rubber do not reach those of the ethylene-α-olefin elastomer, and the chloroprene rubber is insufficient to use in recent severe environment in raw edge cogged V-belt or the like.

EP 2 824 363 A1 (Patent Literature 6) discloses a friction transmission belt having a friction transmission part, in which the friction transmission part is formed of a rubber composition containing an ethylene-α-olefin elastomer, a mineral-based filler and a surfactant.

EP 3 489 544 A1 (Patent Literature 7) discloses a transmission v-belt that is provided with a core, an adhesive rubber layer in which at least a part of the core is embedded, and an expansion rubber layer and a compression rubber layer that are layered with the adhesive rubber layer therebetween.

In other words, the belts described in the above Patent Literatures cannot sufficiently satisfy performances required in the recent power transmission belts. In particular, hardness and modulus of a rubber have the relationship of trade-off with adhesive property, bending fatigue resistance required in a belt and durability in wide temperature range (particularly, adhesive property and bending fatigue resistance), and both have been difficult to achieve simultaneously. DE102008025030A1 shows the preamble of claim 1.

### CITATION LIST

### PATENT LITERATURE

Patent Literature 1: WO1966/13544 (claims, page 10, lines 21 to 25, FIGs. 1 to 3)
Patent Literature 2: WO1997/22662 (claims, page 3, lines 14 to 17, page 3, line 2 from the bottom to page 4, line 1, examples)
Patent Literature 3: WO2010/047029 (claims, paragraph [0039], examples)
Patent Literature 4: JP-A-2003-314616 (claim 1, Figs. 1 and 3, examples)
Patent Literature 5: JP-A-2002-257199 (claim 1, paragraph [0022], examples)

### SUMMARY OF INVENTION

### TECHNICAL PROBLEM

An object of the present invention is to provide a power transmission belt including a cured product of a rubber composition that can enhance hardness and modulus of the cured product of a rubber composition including an ethylene-α-olefin elastomer as a main component without deteriorating cold resistance, heat resistance, adhesive property, bending fatigue resistance and abrasion resistance.

### SOLUTION TO PROBLEM

As result of intensive investigations to achieve the above object, the present inventors have found that by combining an ethylene-α-olefin elastomer, an α,β-unsaturated carboxylic acid metal salt, magnesium oxide, organic peroxide and inorganic filler and adjusting the proportion of the magnesium oxide, hardness and modulus of a cured product of a rubber composition for a power transmission belt containing an ethylene-α-olefin elastomer as a main component can be enhanced without deteriorating cold resistance, heat resistance, adhesive property, bending fatigue resistance and abrasion resistance, and have completed the present invention.

Specifically, the power transmission belt of the present invention is a power transmission belt containing a cured product of a rubber composition containing a rubber component containing an ethylene-α-olefin elastomer, an α,β-unsaturated carboxylic acid metal salt, magnesium oxide, organic peroxide and inorganic filler, wherein the proportion of the magnesium oxide is 2 to 20 parts by mass per 100 parts by mass of the rubber component and is 5 parts by mass or more per 100 parts by mass of the α,β-unsaturated carboxylic acid metal salt. The proportion of the α,β-unsaturated carboxylic acid metal salt is about 5 to 40 parts by mass per 100 parts by mass of the rubber component. The proportion of the organic peroxide is about 2 to 6 parts by mass per 100 parts by mass of the rubber component. The proportion of the magnesium oxide is about 5 to 300 parts by mass per 100 parts by mass of the α,β-unsaturated carboxylic acid metal salt. The rubber component may contain 80 mass% or more of the ethylene-α-olefin elastomer. The ethylene-α-olefin elastomer may contain 80 mass %or more of an ethylene-propylene-diene terpolymer. The α,β-unsaturated carboxylic acid metal salt may be at least one selected from zinc methacrylate and zinc acrylate. The inorganic filler may contain carbon black. The proportion of the inorganic filler may be about 40 to 100 parts by mass per 100 parts by mass of the rubber component. The inorganic filler may further contain silica. Mass ratio between the carbon black and the silica may be the former/the latter=about 60/40 to 99/1. The rubber composition may further contain zinc oxide. The cured product of the rubber composition may have rubber hardness (JIS-A) of about 91 to 98 degree. The rubber composition may further contain short fibers. The proportion of the short fibers may be about 20 to 40 parts by mass per 100 parts by mass of the rubber component. The short fibers may be aramid short fibers. The rubber composition contains short fibers and in the cured product of the rubber composition, bending stress in a direction orthogonal to an orientation direction of the short fibers may be about 8 to 15 MPa. The power transmission belt of the present invention may be raw edge cogged V-belt used for CVT driving.

In the description and the scope of the claims, the term "the direction orthogonal to the orientation direction" is not necessary to be the direction completely orthogonal to the orientation direction and may be the direction in a range of orthogonal direction ±5°.

### ADVANTAGEOUS EFFECTS OF INVENTION

In the present invention, the proportion of the magnesium oxide is adjusted in the combination of the ethylene-α-olefin elastomer, α,β-unsaturated carboxylic acid metal salt, magnesium oxide, organic peroxide and inorganic filler. As a result, hardness and modulus of a cured product of a rubber composition containing an ethylene-α-olefin elastomer as a main component can be enhanced without deteriorating cold resistance, heat resistance, adhesive property, bending fatigue resistance and abrasion resistance. Therefore, the power transmission belt of the present invention can be used in a power transmission belt such as raw edge cogged V-belt or toothed belt each severely demanding the increase of transmission power and compactification of layout, particularly raw edge cogged V-belt used for CTV driving.

### BRIEF DESCRIPTION OF DRAWINGS

FIG 1 is a schematic perspective view illustrating one example of a power transmission belt (raw edge cogged V-belt) of the present invention.
FIG. 2 is a schematic cross-sectional view of the power transmission belt of FIG. 1 cut in a longitudinal direction of the belt.
FIG. 3 is a schematic view for explaining a measurement method of bending stress of power transmission belts obtained in Examples.
FIG. 4 is a schematic view for explaining a durability running test of power transmission belts obtained in Examples.
FIG. 5 is a schematic perspective view of double cogged V-belt prepared in Examples.

### DESCRIPTION OF EMBODIMENTS

### [Rubber composition]

The power transmission belt of the present invention includes a cured product of a rubber composition containing a rubber component containing an ethylene-α-olefin elastomer, an α,β-unsaturated carboxylic acid metal salt, magnesium oxide, an organic peroxide and inorganic filler.

### [Rubber component]

The rubber component preferably contains an ethylene-α-olefin elastomer from the standpoint of excellent cold resistance, heat resistance and weather resistance.

Examples of the ethylene-α-olefin elastomer (ethylene-α-olefin type rubber) include ethylene-α-olefin rubber and ethylene-α-olefin-diene rubber.

Examples of α-olefin constituting the elastomer include chain α-C₃₋₁₂ olefins such as propylene, butene, pentene, methylpentene, hexene and octene. Those α-olefins can be used alone or as mixtures of two or more kinds thereof. Of those α-olefins, α-C₃₋₄ olefins such as propylene (particularly propylene) are preferred.

Examples of a diene monomer constituting the elastomer generally include non-conjugated diene monomers such as dicyclopentadiene, methylene norbornene, ethylidene norbornene, 1,4-hexadiene and cyclooctadiene. Those diene monomers can be used alone or as mixtures of two or more kinds thereof. Of those diene monomers, ethylidene norbornene and 1,4-hexadiene (particularly ethylidene norbornene) are preferred.

Representative examples of the ethylene-α-olefin elastomer include ethylene-α-olefin rubber [such as ethylene-propylene rubber (EPM), ethylene-butene rubber (EBM) or ethylene-octene rubber (EOM)], and ethylene-α-olefin-diene rubber [ethylene-propylene-diene terpolymer (EPDM)]. Those ethylene-α-olefin elastomers can used alone or as mixtures of two or more kinds thereof.

Of those ethylene-α-olefin elastomers, ethylene-α-olefin-diene terpolymer rubber such as ethylene-α-C₃₋₄ olefin-diene terpolymer rubber is preferred from the standpoint of excellent cold resistance, heat resistance and weather resistance. EPDM is particularly preferred. For this reason, the proportion of EPDM may be 50 mass% or more, preferably 80 mass% or more and more preferably 90 mass% or more (particularly 95 mass% or more), based on the entire ethylene-α-olefin elastomer. The proportion of EPDM may be 100 mass% (only EPDM).

In the ethylene-α-olefin elastomer, the proportion (mass ratio) between ethylene and α-olefin may be the former/the latter=40/60 to 90/10, preferably 45/55 to 85/15 (for example, 50/50 to 80/20) and more preferably 52/48 to 70/30 (particularly 55/45 to 60/40) or so.

When the ethylene-α-olefin elastomer contains a diene monomer, the proportion of the diene monomer can be selected from a range of about 1 to 15 mass% based on the entire elastomer and, for example, may be 1.5 to 12 mass% and preferably 2 to 10 mass% (particularly 2.5 to 5 mass %) or so.

Iodine value of the ethylene-α-olefin elastomer containing the diene monomer may be, for example, 3 to 40, preferably 5 to 30 and still more preferably 10 to 20 or so. When the iodine value is too small, vulcanization of the rubber composition is insufficient and abrasion and adhesion are easy to occur. On the other hand, when the iodine value is too large, scorch of the rubber composition is short and is difficult to handle, and additionally heat resistance tends to be decreased.

In addition to the ethylene-α-olefin elastomer, the rubber component may contain other rubber component so long as the amount thereof is a range that does not impair the effect of the present invention. Examples of the other rubber component include diene rubbers [such as natural rubber, isoprene rubber, butadiene rubber, chloroprene rubber, styrene-butadiene rubber (SBR), vinyl pyridine-styrene-butadiene copolymer rubber, acrylonitrile-butadiene rubber (nitrile rubber); hydrogenated products of the diene rubbers such as hydrogenated nitrile rubber (including a mixed polymer of hydrogenated nitrile rubber and unsaturated carboxylic acid metal salt), and the like], olefinic rubbers (such as polyoctenylene rubber, ethylene-vinyl acetate copolymer rubber, chlorosulfonated polyethylene rubber and alkylated chlorosulfonated ethylene rubber), epichlorohydrin rubbers, acrylic rubbers, silicone rubbers, urethane rubbers and fluororubbers.

The proportion of the ethylene-α-olefin elastomer is 50 mass% or more, preferably 80 mass% or more and still more preferably 90 mass% or more (particularly 95 mass% or more), based on the entire rubber component. The proportion may be 100 mass% (the rubber component is only the ethylene-α-olefin elastomer). When the proportion of the ethylene-α-olefin elastomer is too small, cold resistance and heat resistance may be deteriorated.

### (α,β-Unsaturated carboxylic acid metal salt)

The α,β-unsaturated carboxylic acid metal salt is a compound in which an unsaturated carboxylic acid having one or two or more carboxyl group and a metal have been ionically bonded to each other. Examples of the unsaturated carboxylic acid include unsaturated monocarboxylic acid such as (meth)acrylic acid or crotonic acid and unsaturated dicarboxylic acid such as maleic acid, fumaric acid, itaconic acid or citraconic acid. Those unsaturated carboxylic acids can be used alone or as mixtures of two or more kinds thereof. Of those unsaturated carboxylic acids, unsaturated monocarboxylic acid such as (meth)acrylic acid is preferred.

Examples of the metal include polyvalent metals such as the group 2 metals of the periodic table (magnesium, calcium and the like), the group 4 metals of the periodic table (titanium, zirconium and the like), the group 8 metals of the periodic table (iron and the like), the group 10 metals of the periodic table (nickel and the like), the group 11 metals of the periodic table (copper and the like), the group 12 metals of the periodic table (zinc and the like), the group 13 metals of the periodic table (aluminum and the like) and the group 14 metals of the periodic table (lead and the like). Those metals can be used alone or as mixtures of two or more kinds thereof. Of those metals, polyvalent metals, for example, divalent metals such as magnesium, calcium and zinc and trivalent metals such as aluminum (particularly divalent metal such as zinc) are preferred.

Of those, bifunctional monocarboxylic acid divalent metal salts having two radically polymerizable groups in one molecule, for example, zinc (meth)acrylate [zinc di(meth)acrylate or zinc bis(meth)acrylate] such as zinc methacrylate, magnesium (meth)acrylate such as magnesium methacrylate, and trifunctional monocarboxylic acid trivalent metal salts having three radically polymerizable groups in one molecule, for example, aluminum (meth)acrylate [aluminum tri(meth)acrylate] are preferred, zinc (meth)acrylate and/or aluminum acrylate are more preferred and zinc (meth)acrylate (that is, at least one selected from zinc methacrylate and zinc acrylate) is particularly preferred. Furthermore, bifunctional monocarboxylic acid divalent metal salts (particularly zinc methacrylate) is preferred from the standpoint of excellent balance of various properties.

The proportion of the α,β-unsaturated carboxylic acid metal salt is 1 to 50 parts by mass, preferably 5 to 40 parts by mass and still more preferably 8 to 35 parts by mass (particularly 10 to 30 parts by mass) or so, per 100 parts by mass of the rubber component. When the proportion of the α,β-unsaturated carboxylic acid metal salt is too small, hardness and modulus of the cured product of the rubber composition may be deteriorated. On the other hand, when the proportion is too large, adhesive property, bending fatigue resistance and the like may be deteriorated.

### (Magnesium oxide)

In the present invention, by combining a given proportion of magnesium oxide with the α,β-unsaturated carboxylic acid metal salt, hardness and modulus can be enhanced while maintaining cold resistance, heat resistance, adhesive property, bending fatigue resistance and abrasion resistance of the cured product of the rubber composition.

The proportion of magnesium oxide is 2 to 20 parts by mass, preferably 3 to 18 parts by mass and more preferably 5 to 15 parts by mass (particularly 8 to 13 parts by mass) or so, per 100 parts by mass of the rubber component. The proportion of the magnesium oxide is 5 parts by mass or more (for example, 5 to 300 parts by mass) per 100 parts by mass of the α,β-unsaturated carboxylic acid metal salt. The proportion is, for example, 5 to 250 parts by mass (for example, 5 to 200 parts by mass), preferably 10 to 150 parts by mass and more preferably 15 to 100 parts by mass (particularly 20 to 80 parts by mass) or so. When the proportion of the magnesium oxide is too small, hardness and modulus may be deteriorated in the cured product of the rubber composition. On the other hand, when the proportion is too large, adhesive property and bending fatigue resistance may be deteriorated.

### (Organic peroxide)

Examples of the organic peroxide include organic peroxides generally used in crosslinking of rubbers and resins, such as diacyl peroxide, peroxyester and dialkyl peroxide (for example, dicumyl peroxide, t-butylcumyl peroxide, 1,1-di-butyl peroxy-3,3,5-trimethyl cyclohexane, 2,5-dimethyl-2,5-di(t-butylperoxy)hexane, 1,3-bis(t-butylperoxy-isopropyl)-benzene and di-t-butyl peroxide). Those organic peroxides can be used alone or as mixtures of two or more kinds thereof. The organic peroxide is preferably organic peroxide having a decomposition temperature for obtaining a half-life of 1 minute by thermal decomposition of about 150 to 250°C (for example, 175 to 225°C).

The proportion of the organic peroxide is, for example, 1 to 10 parts by mass, preferably 2 to 8 parts by mass and more preferably 2 to 6 parts by mass (for example, 3 to 6 parts by mass) or so, per 100 parts by mass of the rubber component.

### (Inorganic filler)

In the present invention, by adding the inorganic filler to the combination of the α,β-unsaturated carboxylic acid metal salt and magnesium oxide, abrasion resistance, hardness and modulus can be enhanced while maintaining cold resistance, heat resistance, adhesive property and bending fatigue resistance of the cured product of the rubber composition.

Examples of the inorganic filler include carbonaceous materials (carbon black, graphite and the like), metal compounds and synthetic ceramics [metal oxides (metal oxides other than magnesium oxide and zinc oxide) such as calcium oxide, barium oxide, iron oxide, copper oxide, titanium oxide and aluminum oxide, metal silicates such as calcium silicate and aluminum silicate, metal carbides such as silicon carbide and tungsten carbide, metal nitrides such as titanium nitride, aluminum nitride and boron nitride, metal carbonates such as magnesium carbonate and calcium carbonate, metal sulfates such as calcium sulfate and barium sulfate, and the like], and mineral materials (zeolite, diatomaceous earth, calcined diatomaceous earth, activated clay, alumina, silica, talc, mica, kaolin, sericite, bentonite, montmorillonite, smectite and clay). Those inorganic fillers can be used alone or as mixtures of two or more kinds thereof.

Of those inorganic fillers, carbon black and/or silica are preferred, and it is particularly preferred in the cured product of the rubber composition to contain at least carbon black from the standpoint of the improvement of hardness, modulus and abrasion resistance.

Examples of the carbon black include SAF, ISAF, HAF, FEF, GPF and HMF. Those carbon blacks can be used alone or as mixtures of two or more kinds thereof. Of those, FEF is preferred in that the balance between reinforcing effect and dispersibility is good and generation of heat when bending a belt is small.

Average particle diameter of the carbon black can be selected from, for example, a range of about 5 to 200 nm, and is, for example, 10 to 150 nm, preferably 15 to 100 nm and more preferably 20 to 80 nm (particularly 30 to 50 nm) or so. When the average particle diameter of the carbon black is too small, the carbon black may be difficult to be uniformly dispersed, and when the average particle diameter thereof is too large, hardness, modulus and abrasion resistance may be deteriorated.

It is particularly preferred in the inorganic filler containing carbon black to combine carbon with silica from the standpoint of the improvement of adhesive property in addition to hardness, modulus and abrasion resistance.

The silica is fine bulky white powder formed of silicic acid and/or silicate and can be chemically adhered to the rubber component due to the presence of a plurality of silanol groups on the surface thereof.

Examples of the silica include dry silica, wet silica and surface-treated silica. The silica can be classified into, for example, dry white carbon, wet white carbon, colloidal silica and precipitated silica, depending on classification of the production process. Those silicas can be used alone or as mixtures of two or more kinds thereof. Of those silicas, wet white carbon including hydrous silicic acid as a main component is preferred from the standpoints of having a lot of surface silanol groups and strong chemical bonding force with the rubber component.

Average particle diameter of the silica is, for example, 1 to 1000 nm, preferably 3 to 300 nm and more preferably 5 to 100 nm (particularly 10 to 50 nm) or so. When the particle diameter of the silica is too large, mechanical properties may be deteriorated in the cured product of the rubber composition, and when the particle diameter is too small, the silica may be difficult to be uniformly dispersed.

The silica may be any of non-porous silica and porous silica. Nitrogen absorption specific surface area by BET method is, for example, 50 to 400 m²/g, preferably 70 to 350 m²/g and more preferably 100 to 300 m²/g (particularly 150 to 250 m²/g) or so. When the specific surface area is too large, the silica may be difficult to be uniformly dispersed, and when the specific surface area is too small, mechanical properties of a rubber layer may be deteriorated.

The proportion of the inorganic filler can be selected from a range of 10 to 150 parts by mass per 100 parts by mass of the rubber component, and is, for example, 40 to 100 parts by mass, preferably 50 to 80 parts by mass and more preferably 60 to 70 parts by mass or so. When the proportion of the inorganic filler is too small, hardness, modulus and abrasion resistance may be deteriorated in the cured product of the rubber composition and when the proportion is too large, bending fatigue resistance may be deteriorated in the cured product.

When the inorganic filler contains carbon black and silica, a weight ratio between carbon black and silica can be selected from a range of the former/the latter=50/50 to 99.9/0.1, and is, for example, 60/40 to 99/1, preferably 70/30 to 95/5 and more preferably 80/20 to 90/10 or so. When the proportion of the carbon black is too small, hardness, modulus and abrasion resistance may be deteriorated in the cured product of the rubber composition. On the other hand, the proportion is too large, adhesive property may be deteriorated.

The total proportion of carbon black and silica (when only carbon black, the proportion of carbon black) is 50 mass% or more, preferably 60 mass% or more, more preferably 70 mass% or more (particularly 80 mass% or more) and still more preferably 90 mass% or more (particularly 100 mass%), based on the entire inorganic filler.

### (Zinc oxide)

The rubber composition may further contain zinc oxide. By combining zinc oxide in addition to magnesium oxide, as a metal oxide, hardness and modulus can be enhanced in the cured product of the rubber composition, and the balance of various properties can be improved.

The proportion of the zinc oxide is, for example, 0.5 to 20 parts by mass, preferably 1 to 15 parts by mass and more preferably 2 to 10 parts by mass (particularly 3 to 8 parts by mass) or so, per 100 parts by mass of the rubber component. The proportion of the zinc oxide is, for example, 10 to 1000 parts by mass, preferably 20 to 500 parts by mass and more preferably 30 to 200 parts by mass (particularly 50 to 100 parts by mass) or so, per 100 parts by mass of the magnesium oxide. When the proportion of the zinc oxide is too large and too small, the balance of various properties may be deteriorated.

### (Short fibers)

The rubber composition may further contain short fibers. Examples of the short fibers that are widely used include synthetic fibers such as polyolefin fibers (such as polyethylene fibers and polypropylene fibers), polyamide fibers (such as polyamide 6 fibers, polyamide 66 fibers, polyamide 46 fibers and aramid fibers), polyalkylene arylate fibers [poly C₂₋₄ alkylene C₆₋₁₄ arylate fibers such as polyethylene terephthalate (PET) fibers and polyethylene naphthalate (PEN) fibers], vinylon fibers, polyvinyl alcohol fibers and poly-p-phenylene benzobisoxazole (PBO) fibers; natural fibers such as cotton, hemp and wool; and inorganic fibers such as carbon fibers. Those short fibers can be used alone or as mixtures of two or more kinds thereof. Of those short fibers, synthetic fibers and natural fibers, particularly synthetic fibers (such as polyamide fibers and polyalkylene arylate fibers) are preferred, and above all, short fibers containing at least aramid fibers are preferred in that the short fibers are rigid, have high strength and modulus and are easy to project on the surface of the compression rubber layer. The aramid fibers have high abrasion resistance. The aramid fibers are commercially available as, for example, trade names "Conex", "Nomex", "Kevlar", "Technora", "Twaron" and the like.

Average fiber diameter of the short fibers is, for example, 1 to 100 µm, preferably 3 to 50 µm and more preferably 5 to 30 µm (particularly 10 to 20 µm) or so. When the average fiber diameter is too large, mechanical properties may be deteriorated in the cured product of the rubber composition, and when the average fiber diameter is too small, short fibers may be difficult to be uniformly dispersed.

Average length of the short fibers is, for example, 1 to 20 mm, preferably 1.2 to 15 mm (for example, 1.5 to 10 mm) and more preferably 2 to 5 mm (particularly 2.5 to 4 mm) or so. When the average length of the short fibers is too short, dynamic properties (such as modulus) in a grain direction may not be sufficiently enhanced when the cured product of the rubber composition is used in a belt, and on the other hand, when the average length is too long, dispersibility of the short fibers in the rubber composition is deteriorated and bending fatigue resistance may be deteriorated.

The short fibers are preferably subjected to at least an adhesion treatment (or a surface treatment) from the standpoints of dispersibility and adhesive property of the short fibers in the rubber composition. All of the short fibers is not always required to be subjected to the adhesion treatment. The short fibers that have been subjected to an adhesion treatment and the short fibers that are not subjected to an adhesion treatment (untreated short fibers) may be mixed or may be used together.

In the adhesion treatment of the short fibers, the short fibers can be treated by various adhesion treatments. For example, the short fibers can be treated with a treating liquid containing an initial condensate of phenols and formalin (such as prepolymer of novolac or resole phenol resin), a treating liquid containing a rubber component (or a latex), a treating liquid containing the initial condensate and rubber component (latex), a treating liquid containing a silane coupling agent and a reactive compound (adhesive compound) such as an epoxy compound (epoxy resin or the like) or an isocyanate compound. In the preferred adhesion treatment, the short fibers are treated with a treating liquid containing the initial condensate and rubber component (latex), particularly at least a resorcin-formalin-latex (RFL) liquid. Those treating liquids may be combined and used. For example, the short fibers may be pre-treated with the conventional adhesive component, for example, a reactive compound (adhesive compound) such as an epoxy compound (epoxy resin or the like) or an isocyanate compound, and then treated with RFL liquid.

The proportion of the short fibers is, for example, 5 to 100 parts by mass, preferably 10 to 50 parts by mass and more preferably 20 to 40 parts by mass (particularly 25 to 35 parts by mass) or so, per 100 parts by mass of the rubber component. When the proportion of the short fibers is too small, mechanical properties of the cured product of the rubber composition may be deteriorated, and on the other hand, when the proportion is too large, the short fibers are difficult to be uniformly dispersed and bending fatigue resistance and the like may be deteriorated.

### (Other additives)

As necessary, the rubber composition may contain the conventional additives, vulcanization aids, vulcanization accelerators, vulcanization retarders, softeners (oils such as paraffinic oil, naphthenic oil or process oil), processing agents or processing aids (such as stearic acid, stearic acid metal salt, wax, paraffin or fatty acid amide), anti-aging agents (such as antioxidant, thermal anti-aging agent, antiflex-cracking agent and antiozontant), coloring agents, tackifiers, plasticizers, coupling agents (such as silane coupling agent), stabilizers (such as UV absorber or thermal stabilizer), lubricants, flame retardants and antistatic agents. Those additives may be used alone or as mixtures of two or more kinds thereof.

The total proportion of the other additives is 1 to 100 parts by mass, preferably 5 to 50 parts by mass and more preferably 10 to 20 parts by mass or so, per 100 parts by mass of the rubber component. For example, per 100 parts by mass of the rubber component, the proportion of softeners is 1 to 20 parts by mass (particularly 5 to 15 parts), the proportion of the processing agents (or aids) is 0.1 to 5 parts by mass (particularly 0.5 to 3 parts by mass), and the proportion of the anti-aging agents is 0.5 to 20 parts by mass (particularly 1 to 10 parts by mass) or so.

### (Properties of cured product of rubber composition)

The cured product of the rubber composition has large rubber hardness and modulus. Specifically, the rubber hardness (JIS-A) of the cured product of the rubber composition is, for example, 90 to 100 degrees, preferably 91 to 98 degrees (for example, 93 to 97 degrees) and more preferably 95 to 98 degrees (particularly 96 to 97 degrees) or so. In the present description and the scope of claims, the rubber hardness (JIS-A) is that the cured product obtained by press-vulcanizing at a temperature 170°C under a pressure of 2.0 MPa for 20 minutes is measured according to JIS K6253 (2012), and in detail, is measured by the method described in the examples described hereinafter.

In the cured product of the rubber composition, bending stress in a direction orthogonal to an orientation direction of short fibers is, for example, 8 to 15 MPa, preferably 10 to 15 MPa and more preferably 12 to 14.5 MPa (particularly 13 to 14.5 MPa) or so. In the present description and the scope of claims, the bending stress is measured by the method described in the examples described hereinafter. The term "the direction orthogonal to the orientation direction" is not only the direction completely orthogonal to the orientation direction but may be the direction in a range of orthogonal direction±5°. Therefore, the term "the direction orthogonal to the orientation direction" can be "the direction nearly orthogonal to the orientation direction".

When the rubber composition contains short fibers, the short fibers are generally oriented in a given direction. For example, when a compression rubber layer of a power transmission belt is formed of the rubber composition, the short fibers are preferably oriented in a belt width direction and embedded in the compression rubber layer in order to suppress compressive deformation of a belt to pressing force from a pulley.

The rubber composition is used as a cured product vulcanized by the method according to the use. The vulcanization temperature is, for example, 120 to 200°C (particularly 150 to 180°C) or so.

### (Power transmission belt)

Examples of the power transmission belt of the present invention include friction power transmission belts such as flat belt, V-belt, V-ribbed belt, wrapped V-belt, raw edge V-belt, raw edge cogged V-belt and resin block belt; and meshing power transmission belts such as toothed belt. Those power transmission belts contain the rubber composition, and the belt body (particularly compression rubber layer and/or tension rubber layer) is generally formed by the cured product of the rubber composition.

Of those belts, power transmission belts such as a cogged belt severely requiring the increase of transmission power and the compactification of layout and a toothed belt are preferred, and a cogged belt is particularly preferred.

The cogged belt of the present invention includes an adhesive rubber layer in contact with at least a part of cords extending in a longitudinal direction of the belt, an tension rubber layer formed on one surface of the adhesive rubber layer, and a compression rubber layer having a plurality of convex portions (cog parts) formed on the other surface of the adhesive rubber and formed on its inner circumferential surface at given intervals along a longitudinal direction of the belt and friction-engaged with a pulley on its side surface. The cogged belt includes a cogged belt in which the cogged portions are formed on only the compression rubber layer and a double cogged belt in which the same cog portions are formed on an outer circumferential surface of the tension rubber layer in addition to the compression rubber layer. The cogged belt is preferably V-belt (particularly, a variable speed belt in which a gear ratio changes steplessly during belt running, which is used to a speed changer) in which a side surface of the compression rubber layer comes in contact with a pulley. Examples of the cogged V-belt include raw edge cogged V-belt in which cogs are formed at the inner circumferential side of raw edge belt, and raw edge double cogged V-belt in which cogs are formed at both the inner circumferential side and the outer circumferential side of the raw edge belt. Of those, raw edge cogged V-belt used for CTV driving is particularly preferred.

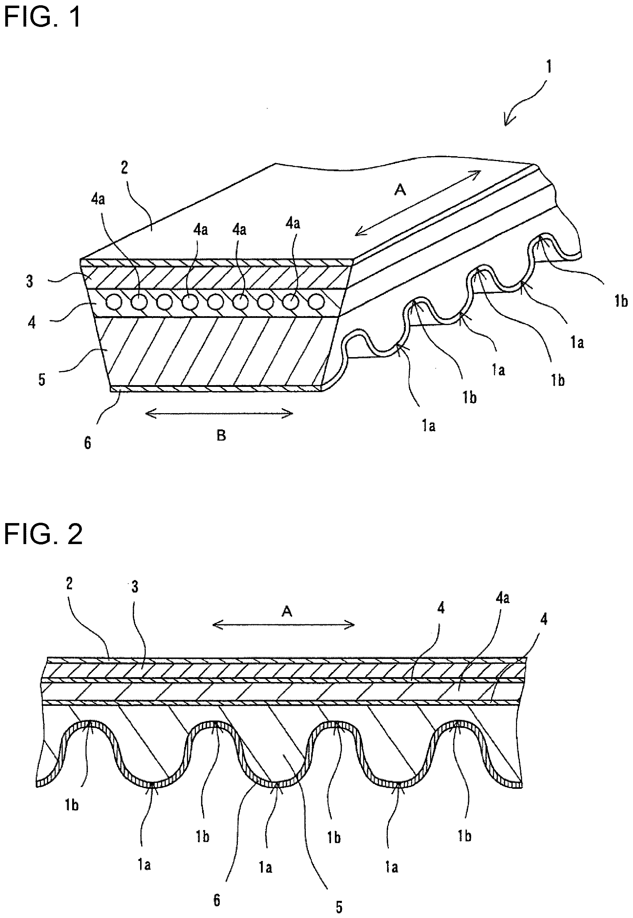

FIG 1 is a schematic perspective view illustrating one example of a power transmission belt (raw edge cogged V-belt) of the present invention, and FIG. 2 is a schematic cross-sectional view of the power transmission belt of FIG. 1 cut in a longitudinal direction of the belt.

In this example, a raw edge cogged V-belt 1 has a plurality of cog portions 1a formed at given intervals along a longitudinal direction (direction A in the drawings) of the belt on the inner circumferential surface of a belt body. Cross-sectional shape in a longitudinal direction of the cog portions 1a is a nearly semicircular shape (curved shape or wave shape) and cross-sectional shape in a direction (width direction or direction B in the drawings) orthogonal to the longitudinal direction is a trapezoidal shape. In other words, each cog portion 1a is projected in a nearly semicircular shape in the cross-section of the direction A from a cog bottom 1b, in a belt thickness direction. The raw edge cogged V-belt 1 has a laminate structure, and a reinforcing fabric 2, an tension rubber layer 3, an adhesive rubber layer 4, a compression rubber layer 5 and a reinforcing fabric 6 are sequentially laminated toward an inner circumferential side (side at which the cog portions 1a are formed) of the belt from an outer circumferential side thereof. Cross-section shape in a belt width direction is a trapezoidal shape in which belt width decreases toward the inner circumferential side of the belt from the outer circumferential side thereof. Tension members 4a are embedded in the adhesive rubber layer 4 and the cog portions 1a are formed in the compression rubber layer 5 by a cogged mold.

Height and pitch of the cog portions are the same as those of the conventional cogged V-belt. In the compression rubber layer, the height of the cog portions is about 50 to 95% (particularly 60 to 80%) of the thickness of the entire compression rubber layer and the pitch of the cog portions (distance between the central portions of the adjacent cog portions) is about 50 to 250% (particularly 80 to 200%) of the height of the cog portions. The same can be applied to the case of forming cog portions in the tension rubber layer.

In this example, the tension rubber layer 3 and the compression rubber layer 5 are formed of the cured product of the rubber composition of the present invention, and the adhesive rubber layer, tension member and reinforcing fabric can use the conventional adhesive rubber layer, tension member and reinforcing fabric, respectively. For example, the following adhesive rubber layer, tension member and reinforcing fabric are used.

### (Adhesive rubber layer)

Similar to the vulcanizing rubber composition of the compression rubber layer and tension rubber, the rubber composition for forming the adhesive rubber layer may contain a rubber component, a vulcanizing agent or a crosslinking agent (a sulfur type vulcanizing agent such as sulfur), a co-crosslinking agent or crosslinking aid (a maleimide type crosslinking agent such as N,N'-m-phenylenedimaleimide), a vulcanization accelerator (TMTD, DPTT, CBS or the like), inorganic filler (carbon black, silica or the like), a softener (oils such as paraffinic oil), a processing agent or processing aid, an anti-aging agent, an adhesion improving agent [a resorcin-formaldehyde cocondensate, an amino resin (a condensate of a nitrogen-containing cyclic compound and formaldehyde, for example, a melamine resin such as hexamethylol melamine or hexaalkoxymethyl melamine (hexamethoxymethyl melamine, hexabutoxymethyl melamine or the like), a urea resin such as methylol urea, a benzoguanamine resin such as methylolbenzoguanamine resin or the like), a cocondensate of those (resorcin-melamine- formaldehyde cocondensate), or the like], a coloring agent, a tackifier, a plasticizer, a coupling agent, a stabilizer, a flame retardant, an antistatic agent, and the like. In the adhesion improving agent, the resorcin-formaldehyde cocondensate and amino resin may be an initial condensate (prepolymer) between a nitrogen-containing cyclic compound such as resorcin and/or melamine, and formaldehyde.

In this rubber composition, rubber similar to or the same type as the rubber component of the rubber composition of the compression rubber layer and tension rubber layer is frequently used as the rubber component. The proportions of the vulcanizing agent or crosslinking agent, a cocrosslinking agent or crosslinking aid, a vulcanization accelerator, a softener and an anti-aging agent can be selected from the same ranges as those in the rubber composition of the compression rubber layer and tension rubber layer, respectively. In the rubber composition of the adhesive rubber layer, the proportion of the inorganic filler is 10 to 100 parts by mass, preferably 20 to 80 parts by mass and more preferably 30 to 50 parts by mass, per 100 parts by mass of the rubber component. The proportion of the adhesion improving agent (resorcin-formaldehyde cocondensate, hexamethoxymethyl melamine or the like) is 0.1 to 20 parts by mass, preferably 1 to 10 parts by mass and more preferably 2 to 8 parts by mass, per 100 parts by mass of the rubber component.

### (Tension member)

The tension member is not particularly limited, but a cord (twisted cord) oriented in a belt width direction at given intervals can be generally used. The cord is arranged by extending in a longitudinal direction of a belt and is generally arranged by extending in parallel at given pitches in parallel to a longitudinal direction of a belt. The cord is that at least a part thereof is brought into contact with the adhesive rubber layer, and may have any of a form that the cord is embedded in the adhesive rubber layer, a form that the cord is embedded between the adhesive rubber layer and the tension rubber layer and a form that the cord is embedded between the adhesive rubber layer and the compression rubber layer. Of those, the form that the cord is embedded in the adhesive rubber layer is preferred in that durability can be improved.

Fibers constituting the cord are polyamide fibers. The fibers may be a multifilament yarn. The fineness of the multifilament yarn is, for example, 2200 to 13500 dtex (particularly 6600 to 11000 dtex). The multifilament yarn contains, for example, 100 to 5,000 numbers, preferably 500 to 4,000 numbers and more preferably 1,000 to 3,000 numbers, of monofilament yarns.

A twisted cord (for example, plied, single twisting or Lang lay) using a multifilament yarn is generally used as the cord. Average wire diameter of the cord (fiber diameter of twisted cord) is, for example, 0.5 to 3 mm, preferably 0.6 to 2 mm and more preferably 0.7 to 1.5 mm or so.

To improve adhesive property to the rubber component, the cord may be subjected to an adhesion treatment (or surface treatment) in the same manner as in the short fibers of the compression rubber layer and tension rubber layer. Similar to the short fibers, the cord is preferably subjected to an adhesion treatment with at least RFL liquid.

### (Reinforcing fabric)

In case where reinforcing fabric is used in a friction power transmission belt, the use is not limited to a form that the reinforcing fabric is laminated on the surface of a compression rubber layer. For example, the reinforcing fabric may be laminated on the surface of the tension rubber layer (the surface opposite the adhesive rubber layer) and the reinforcing fabric may be buried in the compression rubber layer and/or the tension rubber layer (for example, the form described in JP-A-2010-230146). The reinforcing fabric can be formed of, for example, cloth material such as woven fabric, wide angle canvas, knitted fabric or non-woven fabric (preferably woven fabric). If necessary, after the adhesion treatment, for example, treatment due to a RFL liquid (dipping treatment or the like), friction of rubbing an adhesive rubber into the cloth material or lamination of the adhesive rubber and the cloth material, the cloth material may be laminated on the surface of the compression rubber layer and/or the tension rubber layer.

### [Production method of power transmission belt]

Production method of the power transmission belt of the present invention is not particularly limited and can use the conventional methods. In the case of raw edge cogged V-belt, for example, a laminate including the reinforcing fabric (bottom fabric) and a sheet for the compression rubber layer (unvulcanized rubber sheet) is arranged in a flat cogged mold in which tooth portions and groove portions are alternately arranged, such that the reinforcing fabric faces down, the laminate is pressed at a temperature of about 60 to 100°C (particularly 70 to 80°C) under pressure to prepare a cog pad having embossed cog portions (pad that is not completely vulcanized and is in a semi-vulcanized state), and both edges of the cog pad are cut vertically from the apex of a cogged mount part. Furthermore, a cylindrical mold is covered with an inner matrix having tooth portions and groove portions alternately arranged (mold formed of vulcanized rubber), the tooth portions and the groove portions are engaged to each other, a cog pad is wound around those to join at the top of cog mount parts, a first sheet for an adhesive rubber layer (lower adhesive rubber: unvulcanized rubber sheet) is laminated on the wound cog pad, a cord (twisted cord) forming a tension member is spirally spun, and a second sheet for an adhesive rubber layer (upper adhesive rubber: the same sheet as the sheet for the adhesive rubber layer as above), a sheet for an tension rubber layer (unvulcanized rubber sheet) and a reinforcing fabric (top fabric) are sequentially wound thereon. Thus, a molding is prepared. The mold is covered with a jacket (jacket formed of vulcanized rubber) is placed in a vulcanizer and vulcanized at a temperature of about 120 to 200°C (particularly 150 to 180°C) to prepare a belt sleeve. After this vulcanization step, a cutting step of cutting the belt sleeve so as to have V-shaped cross-section using a cutter or the like to form a compression rubber layer is conducted.

The method for orienting short fibers in a belt width direction in the sheet for the tension rubber layer and the sheet for the compression rubber layer includes the conventional methods, for example, a method of passing rubber through a pair of calender rolls having a given gap to roll the rubber into a sheet form, cutting both side surfaces of the rolled sheet having short fibers oriented in the rolling direction in the direction parallel to the rolling direction and simultaneously cutting the rolled sheet in the direction perpendicular to the rolling direction so as to have a belt formation width (length in belt width direction), and joining side surfaces cut in the direction parallel to the rolling direction to each other. For example, the method described in JP-A-2003-14054 can be used. The unvulcanized sheet having short fibers oriented by the method is arranged such that the orientation direction of the short fibers is a width direction of the belt, and vulcanized.

### Examples

The present invention is described in more detail below by reference to examples, but the invention is not construed as being limited to those examples. Raw materials used in the examples, and measurement method or evaluation method of each property are shown below. Unless otherwise indicated, "parts" and "%" are mass basis.

### [Raw materials]

EPDM1: "EP93" manufactured by JSR corporation, ethylene content: 55 wt%, diene content: 2.7 wt%
EPDM2: "EP24" manufactured by JSR corporation, ethylene content: 54 wt%, diene content: 4.5 wt%
Para-aramid short fiber: Twaron cut yarn manufactured by Teijin Limited
Meta-aramid short fiber: Conex cut yarn manufactured by Teijin Limited
Carbon black: "N550" manufactured by Cabot Japan
Silica: "Ultrasil VN3" manufactured by Evonik Degussa Japan, BET specific surface area: 175 m²/g
Paraffinic oil: "DIANA PROCESS OIL PW90" manufactured by Idemitsu Kosan Co., Ltd.
Anti-aging agent A: "NOCRAC CD" manufactured by Ouchi Shinko Chemical Industrial Co., Ltd.
Anti-aging agent B: NOCRUC MB" manufactured by Ouchi Shinko Chemical Industrial Co., Ltd.
Anti-aging agent C: "NONFLEX OD3" manufactured by Seiko Chemical Co., Ltd.
Zinc oxide: "Zinc Oxide Grade No. 2" manufactured by Sakai Chemical Industry Co., Ltd.
Magnesium oxide: "KYOWAMAG 150" manufactured by Kyowa Chemical Industry Co., Ltd.
Stearic acid: "Stearic Acid TSUBAKI" manufactured by NOF Corporation
Zinc methacrylate: "SUNESTER SK-30" manufactured by Sanshin Chemical Industry Co., Ltd.
Bismaleimide: "VULNOC PM" manufactured by Ouchi Shinko Chemical Industrial Co., Ltd.
Organic peroxide: "P-40MB(K)" manufactured by NOF Corporation
Titanium oxide: "R960" manufactured by DuPont
Resorcinol resin: "Penacolite Resin (B-18-S)" manufactured by INDSPEC Chemical Corporation
Hexamethoxymethylolmelamine: "PP-1890S" manufactured by Power Plast
Vulcanization accelerator A: "NOCCELER TT" manufactured by Ouchi Shinko Chemical Industrial Co., Ltd.
Vulcanization accelerator B: "NOCCELER CZ" manufactured by Ouchi Shinko Chemical Industrial Co., Ltd.
Vulcanization accelerator C: "NOCCELER DM" manufactured by Ouchi Shinko Chemical Industrial Co., Ltd.
Sulfur: Manufactured by MIWON Chemicals Co., Ltd.
Cord: Plied cord having total fineness of 10,080 dtex obtained by arranging in parallel two bundles of multifilament of aramid fibers having a fineness of 1,680 dtex and primarily twisting those bundles, and secondarily twisting three twisted bundles obtained in a direction opposite the primarily twisting
Reinforcing fabric: Constitution 2 / 2 twilled nylon canvas (thickness: 0.50 mm)

### [Properties of vulcanized rubber composition]

### (1) Hardness

Unvulcanized rubber sheet obtained using each rubber composition shown in Table 1 was press vulcanized (pressure: 2.0 MPa) at a temperature of 170°C for 20 minutes to prepare a vulcanized rubber sheet (length: 100 mm, width: 100 mm, thickness: 2 mm). According to JIS K6253 (2012), three vulcanized rubber sheets each having a thickness of 2 mm were piled to prepare a sample having a thickness of 6 mm, and hardness of the sample was measured using Durometer A type hardness tester.

### (2) Bending stress

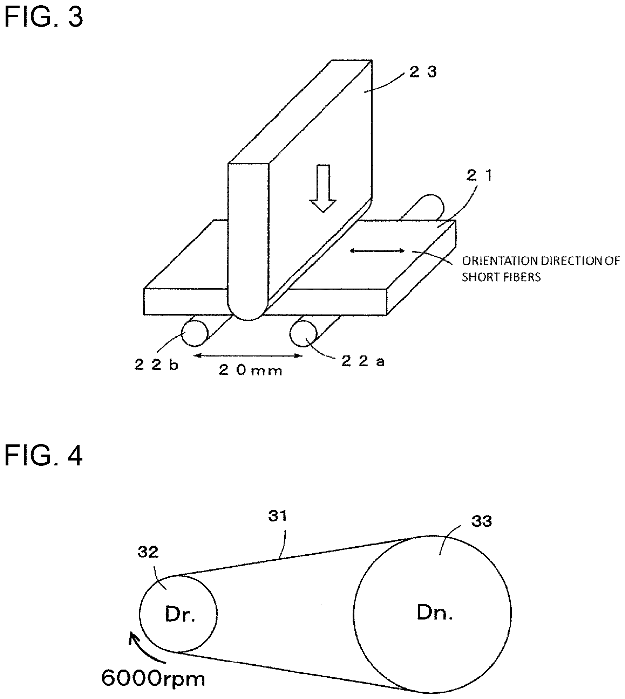

Each rubber composition shown in Table 1 was press vulcanized at a temperature of 170°C for 20 minutes to prepare a vulcanized rubber body (60 mm × 25 mm × 6.5 mm thick). Short fibers were oriented in parallel to a longitudinal direction of the vulcanized rubber body. As shown in FIG. 3, the vulcanized rubber body 21was placed on a pair of rotatable rolls (diameter 6 mm) having a distance of 20 mm and supported thereon. Metal pressing member 23 was put on a central portion of the upper surface of the vulcanized rubber body 21 in a width direction (direction orthogonal to the orientation direction of the short fibers). The tip of the pressing member 23 has a semicircular shape having a diameter of 10 mm, and the tip can smoothly press the vulcanized rubber body 21. When pressing, frictional force acts between the lower surface of the vulcanized rubber body 21 and rolls 22a, 22b with compressive deformation of the vulcanized rubber body 21. However, the influence by friction is reduced by making rolls 22a, 22b rotatable. The state that the tip of the pressing member 23 is brought into contact with the upper surface of the vulcanized rubber body 21 and does not press is an initial position, and the pressing member 23 presses downward the upper surface of the vulcanized rubber body 21 from this state in a speed of 100 mm/min. Stress when bending strain reached 8% was measured as bending stress. By measuring bending stress in the direction orthogonal to the orientation direction of the short fibers, it can be judged that resistance force to buckling deformation called dishing during belt running is high when bending stress is increased, and the bending stress can be used as indexes of high load transmission and high durability. Assuming the belt temperature during running, the measurement temperature was 120°C.

### [Durability running test]

Durability running test was conducted using a biaxial running tester containing a driving (Dr.) pulley 32 having a diameter of 110 mm and a driven (Dn.) pulley 33 having a diameter of 240 mm as shown in FIG. 4. Raw edge cogged V-belt 31 was bridged over each pulley, load of number of revolutions: 6000 rpm of the driving pulley and 25 kW was applied to the belt and the belt was run at an ambient temperature of 80°C for 70 hours. The side surface (surface contacting pulley) of the belt after running was visually measured. Presence or absence of peeling between the compression rubber layer and the cord and the presence or absence of cracks in valley parts of the lower cogs were examined. Those were evaluated by the following criteria.
B: Peeling and cracks do not occur (durability is high, and there is no practical problem)
C: Peeling and cracks occur (durability is low and there is practical problem)

The comprehensive judgement was evaluated by the following criteria.
A: In the durability running test, peeling and cracks do not occur, and rubber hardness is 96 degree or more
B: In the durability running test, peeling and cracks do not occur, and rubber hardness is less than 96 degree
C: In the durability running test, peeling or cracks occurred.

### Examples 1 to 9 and Comparative Examples 1 to 7

### [Properties of rubber compositions of compression rubber layer and tension rubber layer]

### (Formation of rubber layer)

Rubber compositions shown in Table 1 (compression rubber layer and tension rubber layer) and Table 2 (adhesive rubber layer) were subjected to rubber kneading using the conventional method such as Banbury mixer, respectively, and the kneaded rubbers were passed through calender rolls to prepare rolled rubber sheets (sheet for compression rubber layer, sheet for tension rubber layer and sheet for adhesive rubber layer). Rubber hardness and bending stress of the sheet for a compression rubber layer were measured. The measurement results are shown in Table 3. The following belts were manufactured using those sheets.

### [Manufacturing of belt]

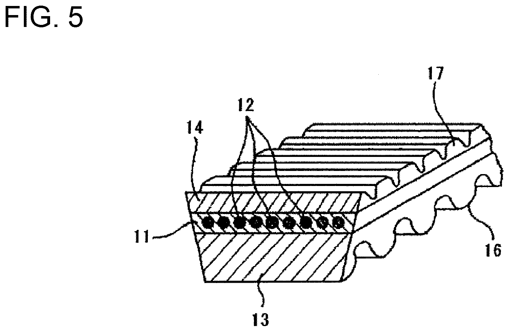

Sheet-like cog pad obtained by previously patterning cog portions on a laminate obtained by laminating a sheet for a compression rubber layer having a given thickness and a reinforcing fabric was wound on the surface of an inner mold made of vulcanized rubber having cogs, mounted on a mold to join those. A sheet for lower adhesive rubber, a cord and a sheet for upper adhesive rubber and a flat tension rubber layer were sequentially wound on the joined product to prepare a molding. The surface of the molding was covered with an outer mold made of vulcanized rubber and having cogs and a jacket. The mold was placed in a vulcanizer and vulcanized at a temperature of 170°C under a pressure of 0.9 MPa for 40 minutes to obtain a belt sleeve. The vulcanization conditions selected the conditions similar to the vulcanization of unvulcanized sheet for an adhesive rubber layer, sheet for a compression rubber layer and sheet for a tension rubber layer. This sleeve was cut in V shape by a cutter to obtain a speed change belt. Specifically, double cogged V- belt having the structure shown in FIG. 5 was prepared. In detail, the double cogged V- belt prepared was double cogged V- belt having the compression rubber layer 13 and the tension rubber layer 14 formed on both surfaces of the adhesive rubber layer 11 having the cord 12 buried therein, respectively, wherein cog portions 16 and 17 were formed on the compression rubber layer 13 and the tension rubber layer 14, respectively. The belt had the size of upper width: 35 mm, thickness: 15 mm and outer circumferential length: 1100 mm. Evaluations results of running test of the belt obtained are shown in Table 3.

**[Table 1]**

| Table 1 (Compression rubber layer and tension rubber layer) | | | | | | | | | | | | | | | | |
|---|---|---|---|---|---|---|---|---|---|---|---|---|---|---|---|---|
| Composition (parts by mass) | Example | | | | | | | | | Comparative Example | | | | | | |
| | 1 | 2 | 3 | 4 | 5 | 6 | 7 | 8 | 9 | 1 | 2 | 3 | 4 | 5 | 6 | 7 |
| EPDM1 | 100 | 100 | 100 | 100 | 100 | 100 | 100 | 100 | 100 | 100 | 100 | 100 | 100 | 100 | 100 | 100 |
| Para-aramid short fiber | 30 | - | 30 | 30 | 30 | 30 | 30 | 30 | 30 | 30 | 30 | 30 | 30 | 30 | 30 | 30 |
| Mata-aramid short fiber | - | 30 | - | - | - | - | - | - | - | - | - | - | - | - | - | - |
| Carbon black | 65 | 65 | 65 | 65 | 65 | 65 | 65 | 55 | 65 | 65 | 65 | 55 | 55 | 65 | 65 | 65 |
| Silica | - | - | - | - | - | - | - | 10 | - | - | - | - | - | - | - | - |
| Paraffinic oil | 10 | 10 | 10 | 10 | 10 | 10 | 10 | 10 | 10 | 10 | 10 | 10 | 10 | 10 | 10 | 10 |
| Anti-aging agent A | 1 | 1 | 1 | 1 | 1 | 1 | 1 | 1 | 1 | 1 | 1 | 1 | 1 | 1 | 1 | 1 |
| Anti-aging agent B | 1 | 1 | 1 | 1 | 1 | 1 | 1 | 1 | 1 | 1 | 1 | 1 | 1 | 1 | 1 | 1 |
| Zinc oxide | 5 | 5 | 5 | 5 | 5 | 5 | 5 | 5 | 5 | 5 | 5 | 5 | 5 | 5 | 10 | 5 |
| Stearic acid | 2 | 2 | 2 | 2 | 2 | 2 | 2 | 2 | 2 | 2 | 2 | 2 | 2 | 2 | 2 | 2 |
| Magnesium oxide (MgO) | 2 | 2 | 5 | 5 | 10 | 20 | 2 | 5 | 5 | - | 1 | 30 | 2 | 5 | - | - |
| Titanium oxide | - | - | - | - | - | - | - | - | - | - | - | - | - | - | - | 5 |
| Zinc methacrylate (MA-Zn) | 15 | 15 | 15 | 25 | 15 | 7 | 40 | 15 | 25 | 30 | 25 | 20 | 45 | - | 30 | 30 |
| Bismaleimide | - | - | - | - | - | - | - | - | - | - | - | - | - | 4 | - | - |
| Organic peroxide | 5 | 5 | 5 | 5 | 5 | 5 | 5 | 5 | 2 | 5 | 5 | 5 | 5 | 5 | 5 | 5 |
| MA-Zn/MgO (wt ratio) | 100/13 | 100/13 | 100/33 | 100/20 | 100/67 | 100/286 | 100/5 | 100/33 | 100/20 | 100/0 | 100/4 | 100/150 | 100/4 | - | 100/0 | 100/0 |

**[Table 2]**

| Table 2 (Adhesive rubber layer) | |
|---|---|
| Composition | Parts by mass |
| EPDM2 | 100 |
| Carbon black | 30 |
| Silica | 15 |
| Paraffinic oil | 10 |
| Anti-aging agent C | 2 |
| Zinc oxide | 5 |
| Resorcin-formaldehyde copolymer | 2 |
| Hexamethoxymethylolmelamine | 3 |
| Vulcanization accelerator A | 1 |
| Vulcanization accelerator B | 0.5 |
| Vulcanization accelerator C | 0.5 |
| Sulfur | 1 |

### [Table 3]

**Table 3**

| | | Example | | | | | | | | | Comparative Example | | | | | | |
|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 |
| Rubber properties | | | | | | | | | | | | | | | | | |
| | Hardness (degree) | 93 | 94 | 95 | 96 | 96 | 91 | 97 | 96 | 92 | 90 | 90 | 96 | 96 | 89 | 90 | 90 |
| | Bending stress (MPa) | 10.3 | 10.5 | 12.3 | 14.1 | 13.5 | 10.1 | 14.6 | 13.1 | 9.8 | 7.8 | 7 | 15.8 | 15.4 | 6.8 | 8.1 | 7.8 |

| Durability running test | | | | | | | | | | | | | | | | | |
|---|---|---|---|---|---|---|---|---|---|---|---|---|---|---|---|---|---|
| | Peeling | B | B | B | B | B | B | B | B | B | C | C | B | B | C | C | C |
| | Crack | B | B | B | B | B | B | B | B | B | B | B | C | C | B | B | B |
| Comprehensive judgement | | B | B | B | A | A | B | A | A | B | C | C | C | C | C | C | C |

As is apparent from Table 3, in Examples 1 to 9 in which the proportion of magnesium oxide is 2 to 20 parts by mass and the proportion of magnesium oxide to 100 parts by mass of zinc methacrylate is 5 parts by mass or more, the comprehensive judgement is "A" and "B", and good results were obtained.

In Comparative Example 1 (corresponding to Patent Literature 3) not containing magnesium oxide and Comparative Example 2 containing magnesium oxide in an amount of only 1 part by mass to 100 parts by mass of the rubber component, rubber hardness is low as 90 degree and peeling occurred in the durability running test. It is considered that when the proportion of magnesium oxide is small, rubber hardness does not increase, stress is concentrated at adhesive interface by buckling deformation and peeling occurred. Comparative Examples 6 and 7 are the example in which the amount of zinc oxide was increased and the example in which titanium oxide was added, in Comparative Example 1. In those examples, hardness and bending stress are low similar to Comparative Example 1 and peeling occurred in the durability running test. It is understood from those results that even though the amount of zinc oxide is increased or titanium oxide is added, in place of magnesium oxide, the effect is low, and in order to improving hardness and bending stress while maintaining durability, magnesium oxide is important. On the other hand, Comparative Example 5 is the example in which zinc methacrylate was not contained and bismaleimide was added as a co-crosslinking agent. Even in this case, rubber hardness is low and peeling occurred. Thus, it is understood that to achieve the object of the present invention, not any material can be selected from the conventional metal oxides and co-crosslinking agents, and the combination of magnesium oxide and α,β-unsaturated acid metal salt is particularly effective.

Comparative Example 3 is the sample in which the amount of magnesium oxide added was increased, and Comparative Example 4 is the example in which the amount of zinc methacrylate added was increased. In those examples, rubber hardness and bending stress were greatly increased, but cracks occurred in the durability running test. It is considered that this is due to that dispersion is poor due to excessive amount of magnesium oxide, the rubber composition is rigid due to excessive amount of zinc methacrylate, and as a result, bending fatigue resistance was deteriorated. It is understood that magnesium oxide and α,β-unsaturated acid metal salt should be added in good balance.

On the other hand, in Examples 1 to 9 in which both magnesium oxide and zinc methacrylate are contained and their amounts were appropriately adjusted, rubber hardness and bending stress increase and cracks and peeling do not occur in the durability running test. Thus, durability was high.

Examples 1 and 2 are the examples in which the kind of short fibers was changed. The constitution of the present invention was similarly effective to both para-aramid short fibers and meta-aramid short fibers similarly.

Example 3 is the example in which the amount of magnesium oxide was increased as compared with Example 1. It is understood that hardness and bending stress are increased and the effect was enhanced.

Example 4 is the example in which the amount of zinc methacrylate was increased as compared with Example 3, and Example 7 is the example in which the amount of zinc methacrylate was increased as compared with Example 1. Hardness and bending stress are remarkably increased and the effect was particularly high.

Example 5 is the example in which the amount of magnesium oxide was increased as compared with Example 3. Hardness and bending stress are remarkably increased and particularly good result was obtained.

Example 6 is the example in which the amount of magnesium oxide added was increased and a mass ratio of magnesium oxide to zinc methacrylate was 2.86. The increase of hardness and bending stress was small. However, peeling and cracks did not occur in the durable running test and the composition had the performance free of practical problem.

Example 8 is the example in which a part of carbon black as the inorganic filler was replaced with silica in the formulation of Example 3. Hardness and bending stress were slightly increased and particularly good result was obtained. Silica has the action improving adhesive property and even in case where durability running is conducted for a longer period of time, it is expected that resistance force is increased against peeling.

Example 9 is the example in which the amount of the organic peroxide added was decreased in the formulation of Example 4. As compared with Example 4, hardness and bending stress were slightly decreased. However, even in case where the amount of organic peroxide (crosslinking agent) is small, hardness and bending stress are high, peeling and cracks did not occur in the durability running test and there was no practical problem on performance.

### INDUSTRIAL APPLICABILITY

The power transmission belt of the present invention can be used in various power transmission belt requiring cold resistance, heat resistance, adhesive property, bending fatigue resistance, abrasion resistance and the like (friction power transmission belts such as flat belt, V-belt, V-ribbed belt, wrapped V-belt, raw edge V-belt, raw edge cogged V-belt and resin-blocked belt; meshing power transmission belts such as toothed belt). In particular, the power transmission belt of the present invention has high hardness and modulus. Therefore, the power transmission belt of the present invention can be preferably used as a power transmission belt such as raw edge cogged V-belt or toothed belt each severely demanding the increase of transmission power and compactification of layout and can be particularly effectively used as raw edge cogged V-belt used for CTV driving.

Although the present invention has been described in detail and by reference to the specific embodiments, it is apparent to one skilled in the art that various modifications or changes can be made without departing the scope of the present invention

### REFERENCE SIGNS LIST

1: Power transmission belt
2, 6: Reinforcing fabric
3: Tension rubber layer
4: Adhesive rubber layer
4a: Tension member
5: Compression rubber layer

## Claims

1. A power transmission belt comprising
a cord, an adhesive rubber layer, a tension rubber layer, and a compression rubber layer,
wherein the compression rubber layer is formed of a cured product of a rubber composition containing
a. a rubber component containing an ethylene-α-olefin elastomer,
b. an α,β-unsaturated carboxylic acid metal salt,
c. magnesium oxide,
d. organic peroxide and
e. inorganic filler,
wherein a proportion of the magnesium oxide is 2 to 20 parts by mass per 100 parts by mass of the rubber component and is 5 parts by mass or more per 100 parts by mass of the α,β-unsaturated carboxylic acid metal salt; and
**characterized in that** the cord is constituted from polyamide fibers and the power transmission belt is a raw edge cogged V-belt.

2. The power transmission belt according to claim 1, wherein a proportion of the α,β-unsaturated carboxylic acid metal salt is 5 to 40 parts by mass per 100 parts by mass of the rubber component.

3. The power transmission belt according to claim 1 or 2, wherein a proportion of the organic peroxide is 2 to 6 parts by mass per 100 parts by mass of the rubber component.

4. The power transmission belt according to any one of claims 1 to 3, wherein a proportion of the magnesium oxide is 5 to 300 parts by mass per 100 parts by mass of the α,β-unsaturated carboxylic acid metal salt.

5. The power transmission belt according to any one of claims 1 to 4, wherein the rubber component contains 80 mass% or more of the ethylene-α-olefin elastomer and the ethylene-α-olefin elastomer contains 80 mass% or more of an ethylene-propylene-diene terpolymer.

6. The power transmission belt according to any one of claims 1 to 5, wherein the α,β-unsaturated carboxylic acid metal salt is at least one selected from zinc methacrylate and zinc acrylate.

7. The power transmission belt according to any one of claims 1 to 6, wherein the inorganic filler contains carbon black and a proportion of the inorganic filler is 40 to 100 parts by mass per 100 parts by mass of the rubber component.

8. The power transmission belt according to claim 7, wherein the inorganic filler further contains silica and mass ratio between the carbon black and the silica is the former/the latter = 60/40 to 99/1.

9. The power transmission belt according to any one of claims 1 to 8, wherein the rubber composition further contains zinc oxide.

10. The power transmission belt according to any one of claims 1 to 9, wherein the cured product of the rubber composition has rubber hardness (JIS-A) of 91 to 98 degree.

11. The power transmission belt according to any one of claims 1 to 10, wherein the rubber composition further contains short fibers and a proportion of the short fibers is 20 to 40 parts by mass per 100 parts by mass of the rubber component.

12. The power transmission belt according to claim 11, wherein the short fibers are aramid short fibers.

13. The power transmission belt according to any one of claims 1 to 12, wherein the rubber composition contains short fibers and the cured product of the rubber composition has bending stress of 8 to 15 MPa in a direction orthogonal to an orientation direction of the short fibers.

14. The power transmission belt according to any one of claims 1 to 13, which is a raw edge cogged V-belt used for continuously variable transmission (CVT) driving.

15. The power transmission belt according to claim 1, wherein the power transmission belt further comprises a reinforcing fabric.

## Patentansprüche

1. Kraftübertragungsriemen, umfassend einen gratkantigen Zahnkeilriemen, wobei der gratkantige Zahnkeilriemen umfasst:
einen Kord, eine klebende Gummischicht, eine
Spanngummischicht und eine Kompressionsgummischicht,
wobei die Kompressionsgummischicht aus einem gehärteten Produkt einer Gummizusammensetzung gebildet ist, die enthält
a. eine Gummikomponente, die ein Ethylen-α-Olefin-Elastomer enthält,
b. ein α,β-ungesättigtes Carbonsäuremetallsalz,
c. Magnesiumoxid,
d. ein organisches Peroxid und
e. einen anorganischen Füllstoff,
wobei ein Anteil des Magnesiumoxids 2 bis 20 Massenteile pro 100 Massenteile der Gummikomponente und 5 Massenteile oder mehr pro 100 Massenteile des α,β-ungesättigten Carbonsäuremetallsalzes beträgt; und
wobei der Kord aus Polyamidfasern gebildet ist.

2. Kraftübertragungsriemen gemäß Anspruch 1, wobei der Anteil des α,β-ungesättigten Carbonsäuremetallsalzes 5 bis 40 Massenteile pro 100 Massenteile der Gummikomponente beträgt.

3. Kraftübertragungsriemen gemäß Anspruch 1 oder 2, wobei der Anteil des organischen Peroxids 2 bis 6 Massenteile pro 100 Massenteile der Gummikomponente beträgt.

4. Kraftübertragungsriemen gemäß mindestens einem der Ansprüche 1 bis 3, wobei der Anteil des Magnesiumoxids 5 bis 300 Massenteile pro 100 Massenteile des α,β-ungesättigten Carbonsäuremetallsalzes beträgt.

5. Kraftübertragungsriemen gemäß mindestens einem der Ansprüche 1 bis 4, wobei die Gummikomponente 80 Massen-% oder mehr des Ethylen-α-Olefin-Elastomers enthält und das Ethylen-α-Olefin-Elastomer 80 Massen-% oder mehr eines Ethylen-Propylen-Dien-Terpolymers enthält.

6. Kraftübertragungsriemen gemäß mindestens einem der Ansprüche 1 bis 5, wobei das α,β-ungesättigte Carbonsäuremetallsalz mindestens eines ist, das ausgewählt ist aus Zinkmethacrylat und Zinkacrylat.

7. Kraftübertragungsriemen gemäß mindestens einem der Ansprüche 1 bis 6, wobei der anorganische Füllstoff Ruß enthält und der Anteil des anorganischen Füllstoffs 40 bis 100 Massenteile pro 100 Massenteile der Gummikomponente beträgt.

8. Kraftübertragungsriemen gemäß Anspruch 7, wobei der anorganische Füllstoff ferner Kieselsäure enthält und das Massenverhältnis zwischen dem Ruß und der Kieselsäure ersteres/letzteres = 60/40 bis 99/1 beträgt.

9. Kraftübertragungsriemen gemäß mindestens einem der Ansprüche 1 bis 8, wobei die Gummizusammensetzung ferner Zinkoxid enthält.

10. Kraftübertragungsriemen gemäß mindestens einem der Ansprüche 1 bis 9, wobei das gehärtete Produkt der Gummizusammensetzung eine Gummihärte (JIS-A) von 91 bis 98 Grad aufweist.

11. Kraftübertragungsriemen gemäß mindestens einem der Ansprüche 1 bis 10, wobei die Gummizusammensetzung ferner Kurzfasern enthält und der Anteil der Kurzfasern 20 bis 40 Massenteile pro 100 Massenteile der Gummikomponente beträgt.

12. Kraftübertragungsriemen gemäß Anspruch 11, wobei es sich bei den Kurzfasern um Aramid-Kurzfasern handelt.

13. Kraftübertragungsriemen gemäß mindestens einem der Ansprüche 1 bis 12, wobei die Gummizusammensetzung Kurzfasern enthält und das gehärtete Produkt der Gummizusammensetzung eine Biegespannung von 8 bis 15 MPa in einer Richtung orthogonal zu der Orientierungsrichtung der Kurzfasern aufweist.

14. Kraftübertragungsriemen gemäß mindestens einem der Ansprüche 1 bis 13, bei dem es sich um einen gratkantigen Zahnkeilriemen handelt, der für den Antrieb eines stufenlosen Getriebes (CVT) verwendet wird.

15. Kraftübertragungsriemen gemäß Anspruch 1, wobei der Kraftübertragungsriemen ferner ein Verstärkungsgewebe umfasst.

## Revendications

1. Courroie de transmission de puissance comprenant un cordon, une couche de caoutchouc adhésif, une couche de caoutchouc de tension, et une couche de caoutchouc de compression, dans laquelle la couche de caoutchouc de compression est formée d'un produit durci d'une composition de caoutchouc contenant
a. un composant en caoutchouc contenant un élastomère éthylène-α-oléfine,
b. un sel métallique d'acide carboxylique α,β-insaturé,
c. de l'oxyde de magnésium,
d. du peroxyde organique et
e. une charge inorganique,
dans laquelle une proportion de l'oxyde de magnésium est de 2 à 20 parts en masse pour 100 parts en masse du composant en caoutchouc et est de 5 parts en masse ou plus pour 100 parts en masse du sel métallique d'acide carboxylique α,β-insaturé ; et
**caractérisée en ce que** le cordon est constitué de fibres de polyamide et la courroie de transmission de puissance est une courroie trapézoïdale crantée à bord brut.

2. Courroie de transmission de puissance selon la revendication 1, dans laquelle une proportion du sel métallique d'acide carboxylique α,β-insaturé est de 5 à 40 parts en masse pour 100 parts en masse du composant en caoutchouc.

3. Courroie de transmission de puissance selon la revendication 1 ou la revendication 2, dans laquelle une proportion du peroxyde organique est de 2 à 6 parts en masse pour 100 parts en masse du composant en caoutchouc.

4. Courroie de transmission de puissance selon l'une quelconque des revendications 1 à 3, dans laquelle une proportion d'oxyde de magnésium est de 5 à 300 parts en masse pour 100 parts en masse du sel métallique d'acide carboxylique α,β-insaturé.

5. Courroie de transmission de puissance selon l'une quelconque des revendications 1 à 4, dans laquelle le composant en caoutchouc contient 80 % en masse ou plus de l'élastomère éthylène-α-oléfine et l'élastomère éthylène-α-oléfine contient 80 % en masse ou plus d'un terpolymère éthylène-propylène-diène.

6. Courroie de transmission de puissance selon l'une quelconque des revendications 1 à 5, dans laquelle le sel métallique d'acide carboxylique α,β-insaturé est au moins un sel sélectionné parmi le méthacrylate de zinc et l'acrylate de zinc.

7. Courroie de transmission de puissance selon l'une quelconque des revendications 1 à 6, dans laquelle la charge inorganique contient du noir de carbone et une proportion de la charge inorganique est de 40 à 100 parts en masse pour 100 parts en masse du composant en caoutchouc.

8. Courroie de transmission de puissance selon la revendication 7, dans laquelle la charge inorganique contient en outre de la silice et le rapport massique entre le noir de carbone et la silice est le premier/le second = 60/40 à 99/1.

9. Courroie de transmission de puissance selon l'une quelconque des revendications 1 à 8, dans laquelle la composition de caoutchouc contient en outre de l'oxyde de zinc.

10. Courroie de transmission de puissance selon l'une quelconque des revendications 1 à 9, dans laquelle le produit durci de la composition de caoutchouc présente une dureté de caoutchouc (JIS-A) de 91 à 98 degrés.

11. Courroie de transmission de puissance selon l'une quelconque des revendications 1 à 10, dans laquelle la composition de caoutchouc contient en outre des fibres courtes et une proportion des fibres courtes est de 20 à 40 parts en masse pour 100 parts en masse du composant en caoutchouc.

12. Courroie de transmission de puissance selon la revendication 11, dans laquelle les fibres courtes sont des fibres courtes d'aramide.

13. Courroie de transmission de puissance selon l'une quelconque des revendications 1 à 12, dans laquelle la composition de caoutchouc contient des fibres courtes et le produit durci de la composition de caoutchouc présente une contrainte de flexion de 8 à 15 MPa dans une direction orthogonale à une direction d'orientation des fibres courtes.

14. Courroie de transmission de puissance selon l'une quelconque des revendications 1 à 13, qui est une courroie trapézoïdale crantée à bord brut utilisée pour l'entraînement par transmission à variation continue (CVT).

15. Courroie de transmission de puissance selon la revendication 1, dans laquelle la courroie de transmission de puissance comprend en outre un tissu de renforcement.
